# EUROPÄISCHE PATENTSCHRIFT

(11) **EP 0 970 380 B1**
(45) Veröffentlichungstag und Bekanntmachung des Hinweises auf die Patenterteilung: **17.09.2003**
(21) Anmeldenummer: 98910517.6
(22) Anmeldetag: 24.03.1998
(51) Int. Cl.: G01P 3/44, G01P 1/02, B60T 8/00

(54) **HALTERUNG EINES RADDREHZAHLSENSORS**
MOUNTING FOR A WHEEL-SPEED SENSOR
FIXATION POUR UN DETECTEUR DE VITESSE DE ROTATION DE ROUE

(30) Priorität: 26.03.1997 AT 18097
(43) Veröffentlichungstag der Anmeldung: 12.01.2000
(73) Patentinhaber: Steyr-Daimler-Puch Spezialfahrzeug AG & Co. KG, 1111 Wien (AT)
(72) Erfinder: SKOFF, Gerhard, A-1130 Wien (AT); STRASSER, Alfred, A-1230 Wien (AT)
(74) Vertreter: Rippel, Andreas, Dipl.-Ing.
(86) Internationale Anmeldenummer: AT9800077
(87) Internationale Veröffentlichungsnummer: WO98043097

(56) Entgegenhaltungen:
- EP-A- 0 092 605
- DE-A- 2 111 499
- DE-A- 2 248 274
- DE-A- 4 230 043
- US-A- 4 161 120
- US-A- 4 864 231

## Beschreibung

Die Neuerung handelt von einer Halterung eines Raddrehzahlsensors im Radträger eines Kraftfahrzeuges zur Abtastung eines umlaufenden Polringes, bestehend aus einem eine Bohrung des Radträgers durchdringenden Einsatz, in den der Sensor von der dem Polring abgekehrten Seite einschiebbar ist.

Raddrehzahlsensoren, insbesondere passive induktiv arbeitende Sensoren für Kraftfahrzeuge, werden üblicherweise, wie in der DE 37 03 395 A zu sehen, in einen schützenden Einsatz gesteckt. Dabei wird meist eine Federhülse verwendet und der Sensor wird direkt an den Polring herangeschoben. Durch das Lagerspiel der den Polring tragenden rotierenden Teile und die Unrundheit des Polringes wird der Sensor dann etwas herausgedrückt. Dabei stellt sich im Einbauzustand ein Spalt von etwa 0,2 mm ein.

Da konstruktionsbedingt das Lagerspiel im Laufe der Nutzungsdauer größer wird, darf die Klemmkraft der Federhülse nur so groß sein, daß der Sensor bei Berührung mit dem Polring etwas herausgedrückt, aber nicht beschädigt wird. Der Abstand, bei dem gerade noch verwertbare Impulse erzeugt werden, liegt bei etwa 0,8 mm, je nach Frequenz. Da aber gerade bei der Erfassung des Antriebsschlupfes beim Anfahren (niedere Frequenzen), auch die Amplitude klein, aber genaue Messung erforderlich ist, soll dieser Abstand so klein wie möglich sein.

Speziell bei Geländefahrzeugen kommt es vor, daß Schlammpartikel und Steinchen zwischen Polring und Sensor geraten und den Sensor wegdrücken. Dabei wird der Abstand zwischen Sensor und Polring über den Arbeitsbereich hinaus vergrößert. Auch das Ausfüllen der Zahnlücken des Polringes mit nichtmetallischem Material (z.B. EP 597 378 A1) schafft keine befriedigende Abhilfe. Vor dem Sensor kann sich ein Lehmberg aufbauen, der entweder den Sensor hinausschiebt oder, wenn er erhärtet oder gefriert, den Sensor beschädigt.

Es ist daher Ziel der Neuerung, eine Halterung für einen Drehzahlsensor vorzuschlagen, die die genannten Nachteile vermeidet. Sie soll somit die genaue Positionierung sicherstellen und den Sensor vor mechanischer Einwirkung schützen.

Dies wird durch den Anspruch 1 erreicht.

Der Anschlag bestimmt die optimale Stellung; der überragende Rand schützt den Sensor, sodaß ein Hinausschieben des Sensors bei Berührung nicht mehr geduldet werden muß.

In einer besonders vorteilhaften Weiterbildung der Neuerung weist der dem Polring zugekehrte Rand des Einsatzes in den Sektoren ausserhalb der vom Polring bestrichenen Zone Ausnehmungen auf (Anspruch 2). Diese bezogen auf die Umfangsrichtung des Polringes seitlichen Ausnehmungen sorgen für den seitlichen Austritt von Erdteilen, die vom Polring unter dem Rand durchgequetscht wurden, sie können seitlich herausfallen und verhindern so einen Materialaufbau unter dem Sensor, durch den er hinausgedrückt werden könnte.

In Weiterbildung sind in dem Sektor zwei Ausnehmungen vorgesehen, je eine in Umfangsrichtung des Polringes vor und nach der der Stelle größter Breite des Sektors (Anspruch 3). Dadurch bleibt der Sensor vor seitlichen Einwirkungen geschützt; die jeweils zwei Ausnehmungen können für beide Drehrichtungen optimal geformt und angeordnet werden.

In einer möglichen Ausführungsform ist der Anschlag als Schulter im Inneren des Einsatzes ausgebildet (Anspruch 4), in einer anderen als einwärts gerichtete Verlängerung des Randes der der Stelle größter Breite des Sektors (Anspruch 5). Der Anschlag ist somit seitlich der vom Polring überstrichenen Zone angeordnet und ergänzt so auch die selbstreinigende Wirkung des Einsatzes.

In Weiterbildung der Ausführungsform mit dem als Schulter im Inneren des Einsatzes ausgebildeten Anschlag, ist der Kopf des Sensors zwischen einem Federring mit aufliegendem O-Ring und der Schulter positioniert (Anspruch 6).

In einer alternativen Ausführungsform ist der Sensor mittels eines Bügels in seiner tiefsten Stellung gehalten (Anspruch 7).

Im folgenden wird die Neuerung anhand von Abbildungen beschrieben und erläutert. Es stellen dar:
Fig.1: Einen Axialschnitt eines ersten Ausführungsbeispieles der Neuerung,
Fig.2: den dazugehörigen Umfangsschnitt,
Fig.3: einen Axialschnitt eines zweiten Ausführungsbeispieles der Neuerung,
Fig.4: den dazugehörigen Umfangsschnitt.

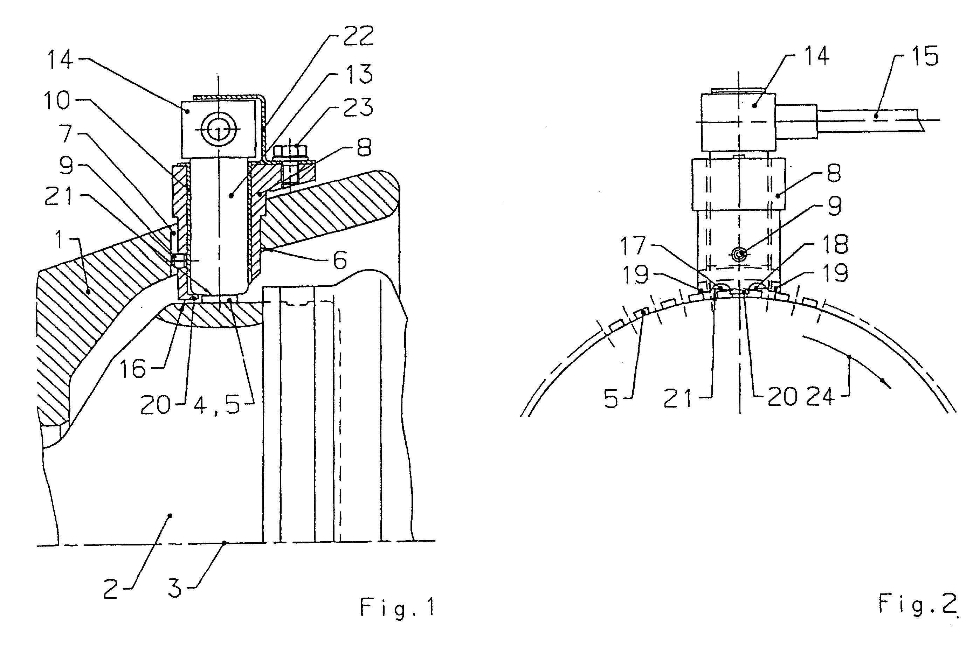

In Fig.1 ist der Radträger eines Kraftfahrzeuges mit 1 und der mit Raddrehzahl umlaufende Teil eines beispielsweise angetriebenen Rades mit 2 bezeichnet. Der Radträger 1 ist der nicht umlaufende Teil einer Achseinheit, an dem das Rad gelagert ist. Der umlaufende Teil 2 könnte Teil einer Bremstrommel oder Bremsscheibe, eine Nabe, Teil einer angetriebenen Achse oder, wie im gezeigten Ausführungsbeispiel, Teil eines Gleichlaufgelenkes einer angetriebenen Lenkachse sein. Seine Rotationsachse ist mit 3 bezeichnet. Auf diesem umlaufenden Teil 2 ist ein Polring 4 mit beabstandeten Zähnen 5 angebracht.

An einer der Lage des Polringes entsprechenden Stelle weist der Radträger 1 eine Bohrung 6 auf, hier mit einer achsialen Nut 7. Der zur Aufnahme eines Sensors bestimmte Einsatz 8 passt in die Bohrung 6 und ist dort mittels eines Paßstiftes gegen Verdrehen gesichert. Der Einsatz 8 nimmt einen Sensor 13 auf, aus dessen Kopf 14 eine Signalleitung 15 (Figur 2) austritt.

Der im Grundriß kreisförmige untere Rand 16 des Einsatzes 8 weist eine bemerkenswerte Kontur auf. Es ist zweckmäßig, die vom Polring 4 nicht bestrichenen Teile des Grundrisses als Sektoren zu bezeichnen. In zumindest einem der beiden Sektoren sind Ausnehmungen 17,18 ausgebildet und in Umfangsrichtung vor und hinter diesen, dort wo der Rand 16 vom Polring 4 überstrichen wird, Überstände 19. Zwischen den Ausnehmungen 17,18 an der Stelle größter Breite des Sektors, ist der Rand 16 nach unten verlängert und ein-wärts gerichtet, er bildet einen Anschlag 20 für den Boden 21 des Sensors 13. (Siehe Figur 1 und 2).

Nun wird anhand der Figur 2 die Wirkungsweise erläutert: bei Drehung des umlaufenden Teiles 2 in Richtung 24 werden vom Polring 4 geförderte Schmutzteilchen zuerst vom Überstand 19 gewissermassen abgekratzt. Was überbleibt, bzw. sich zwischen den Zähnen 5 befindet, wird durch die Reibungswirkung des Polringes 4 und die Keilwirkung des Bodens 21 des Sensors durch die im Umlaufsinn gesehen seitlichen Ausnehmungen 17, herausgedrückt. Bei Umkehrung des Drehsinnes wirkt die zweite Ausnehmung 18 und der ihr vorgelagerte Überstand 19 in derselben Weise. Der Anschlag 20 zwischen den beiden Ausnehmungen 17,18 schützt Polring 4 und Sensor 13 auch gegen Beschädigung von der Seite.

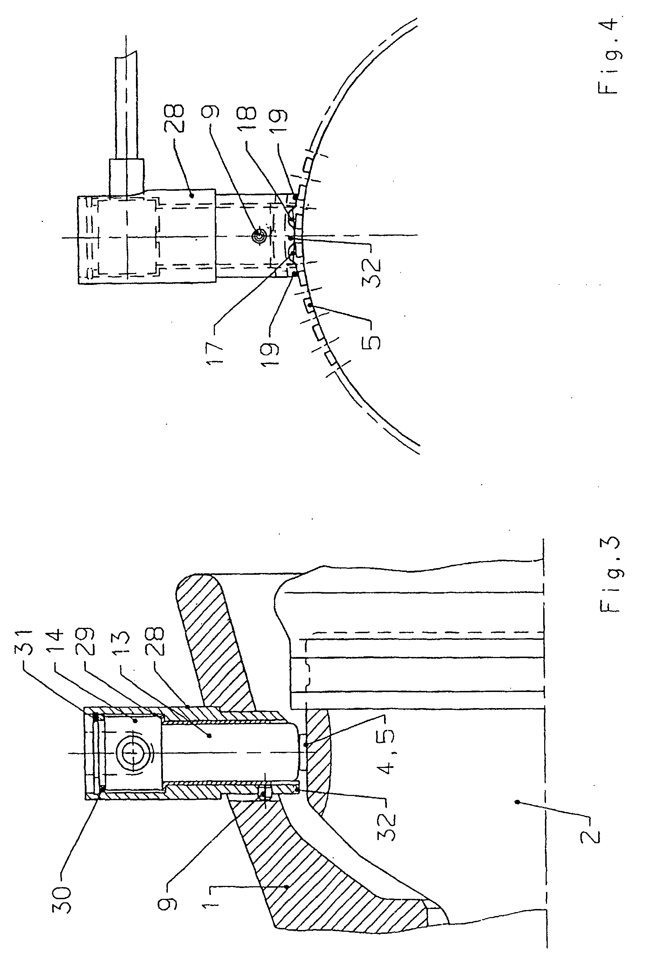

Das in den Figuren 3 und 4 dargestellte Ausführungsbeispiel unterscheidet sich von dem vorherigen nur dadurch, daß der Einsatz 28 innen eine Schulter 29 aufweist, auf der sich der Kopf 14 des Sensors 13 abstützt. Niedergehalten wird der Kopf 14 von einem Federring 31, vorzugsweise über einen elastischen O-Ring 30. In Figur 4 ist zu erkennen, daß der Lappen 32 zwischen den beiden Ausnehmungen 17,18, obwohl hier nicht als Anschlag gebraucht, beibehalten bleibt.

Der Einsatz 8 bzw. 28 kann in dem Radträger 1 auf beliebige Weise befestigt sein. Auch die Federhülse 10 ist nicht unbedingt erforderlich, da der Sensor 13 wegen der besonderen Gestaltung des Randes 16 trotz geringen Abstandes zwischen dem Boden 21 des Sensors und dem Polring 4 nicht mehr ausschiebbar sein muß, jedoch kann sie als axiale Führung verbleiben und erlaubt damit eine gröbere Fertigungstoleranz des Einsatzes (8).

## Patentansprüche

1. Halterung eines Raddrehzahlsensors im Radträger (1) eines Kraftfahrzeuges zur Abtastung eines umlaufenden Polringes (4), bestehend aus einem eine Bohrung (6) des Radträgers (1) durchdringenden Einsatz (8,28), in den der Sensor (13) von der dem Polring (4) abgekehrten Seite einschiebbar ist, **dadurch gekennzeichnet, daß** der Einsatz (8,28) einen Anschlag (20,29) für den Sensor (13) in ganz eingeschobener Stellung aufweist und daß der dem Polring (4) zugekehrte Rand (16) des Einsatzes (8,28) den Boden (21) des Sensors in dieser Stellung überragt.

2. Halterung eines Raddrehzahlsensors nach Anspruch 1, **dadurch gekennzeichnet, daß** der dem Polring (4) zugekehrte Rand (16) des Einsatzes (8,28) in den Sektoren ausserhalb der vom Polring (4) bestrichenen Zone Ausnehmungen (17,18) aufweist.

3. Halterung eines Raddrehzahlsensors nach Anspruch 2, **dadurch gekennzeichnet, daß** in dem Sektor zwei Ausnehmungen (17,18) vorgesehen sind, je eine in Umfangsrichtung des Polringes vor (17) und nach (18) der der Stelle größter Breite des Sektors.

4. Halterung eines Raddrehzahlsensors nach Anspruch 1, **dadurch gekennzeichnet, daß** der Anschlag (29) als Schulter im Inneren des Einsatzes (28) ausgebildet ist. (Fig.3,4)

5. Halterung eines Raddrehzahlsensors nach Anspruch 2, **dadurch gekennzeichnet, daß** der Anschlag (20) als einwärts gerichtete Verlängerung des Randes (16) an der Stelle größter Breite des Sektors ausgebildet ist. (Fig.1,2)

6. Halterung eines Raddrehzahlsensors nach Anspruch 4, **dadurch gekennzeichnet, daß** der Sensor (13) mit seinem Kopf (14) in dem Einsatz (28) zwischen einem Federring (31) mit aufliegenden O-Ring (30) und der Schulter (29) positioniert ist. (Fig.3,4)

7. Halterung eines Raddrehzahlsensors nach Anspruch 2, **dadurch gekennzeichnet, daß** der Sensor (13) mittels eines Bügels (22) in seiner tiefsten Stellung gehalten ist. (Fig.1,2)

## Claims

1. A mounting means for a wheel-revolution sensor in the wheel support (1) of a vehicle for scanning a revolving pole ring (4), comprising an insert (8, 28) which passes through a bore (6) in the wheel support (1), into which the sensor (13) can be inserted from the side averted from the pole ring (4), **characterised in that** the insert (8, 28) is provided with a limit stop (20, 29) for the sensor (13) in the fully inserted position, and **in that** the edge (16) of the insert (8, 28) which faces the pole ring (4) projects beyond the bottom surface (21) of the sensor in this position.

2. The mounting means for a wheel-revolution sensor as claimed in Claim 1, **characterised in that** the edge (16) of the insert (8, 28) which faces the pole ring (4) has recesses (17, 18) in the sectors which extend beyond the zone swept by the pole ring (4).

3. The mounting means for a wheel-revolution sensor as claimed in Claim 2, **characterised in that** two recesses (17, 18) are provided, each in the peripheral direction of the pole ring before (17) and after (18) the point of greatest width of the sector.

4. The mounting means for a wheel-revolution sensor as claimed in Claim 1, **characterised in that** the limit stop (29) is designed as a shoulder in the interior of the insert (28). (Figures 3, 4)

5. The mounting means for a wheel-revolution sensor as claimed in Claim 2, **characterised in that** the limit stop (20) is designed as an inwardly directed projection of the edge (16) at the point of greatest width of the sector. (Figures 1, 2)

6. The mounting means for a wheel-revolution sensor as claimed in Claim 4, **characterised in that** the sensor (13) has a head (14) positioned in the insert (28) between a spring ring (31), supporting an O-ring (30), and the shoulder (29). (Figures 3, 4)

7. The mounting means for a wheel-revolution sensor as claimed in Claim 2, **characterised in that** the sensor (13) is held in position by a bracket (22) in its lowest position. (Figures 1, 2)

## Revendications

1. Support d'un capteur de nombre de tours de roue dans le support de roue (1) d'un véhicule à moteur pour la palpation d'un anneau polaire (4) rotatif, composé d'un insert (8, 28) pénétrant dans un alésage (6) du support de roue (1), dans lequel on enfiche le capteur (13) à partir de la partie opposée à l'anneau polaire (4), **caractérisé en ce que**, l'insert (8, 28) possède une butée (20, 29) pour le capteur (13) en position enfoncé et que le rebord (16) de l'insert (8, 28) de la base (21) du capteur opposé à l'anneau polaire (4) dépasse dans cette position.

2. Support d'un capteur de nombre de tours de roue selon la revendication 1, **caractérisé en ce que** le rebord (16) de l'insert (8, 28) opposé à l'anneau polaire (4) possède des creux (17, 18) dans les secteurs situés à l'extérieur de la zone balayée de l'anneau polaire (4).

3. Support d'un capteur de nombre de tours de roue selon la revendication 2, **caractérisé en ce que** deux creux (17, 18) sont prévus dans le secteur, respectivement un creux dans le sens de la circonférence de l'anneau polaire devant (17) et derrière (18) le point de la largeur la plus importante du secteur.

4. Support d'un capteur de nombre de tours de roue selon la revendication 1, **caractérisé en ce que** la butée (29) est constituée comme un épaulement à l'intérieur de l'insert (28). (Figure 3, 4)

5. Support d'un capteur de nombre de tours de roue selon la revendication 2, **caractérisé en ce que** la butée (20) est constituée comme un rallongement orienté vers l'intérieur du rebord (16) du point de la largeur la plus importante du secteur. (Figures 1,2)

6. Support d'un capteur de nombre de tours de roue selon la revendication 4, **caractérisé en ce que** le capteur (13) avec sa tête (14) est positionné dans l'insert (28), entre la rondelle élastique (31) maintenant l'anneau torique (30) et l'épaulement (29). (Figures 3, 4)

7. Support d'un capteur de nombre de tours de roue selon la revendication 2, **caractérisé en ce que** le capteur (13) est retenu par une bride (22) dans sa position la plus basse. (Figures 1, 2)
